# FASCICULE DE BREVET EUROPEEN

(11) **EP 0 517 632 B1**
(45) Date de publication et mention de la délivrance du brevet: **07.06.1995**
(21) Numéro de dépôt: 92440066.6
(22) Date de dépôt: 03.06.1992
(51) Int. Cl.: A01D 78/10, A01B 73/04

(54) **Machine agricole, notamment une andaineuse de végétaux**
Landmaschine, insbesondere ein Pflanzenschwader
Agricultural machine, especially a plant windrower

(30) Priorité: 05.06.1991 FR 9106906
(43) Date de publication de la demande: 09.12.1992
(73) Titulaire: KUHN S.A., F-67700 Saverne (FR)
(72) Inventeur: Aron, Jérôme, F-67330 Dossenheim Sur Zinsel (FR); Demanet, Didier, F-57444 Reding (FR)
(74) Mandataire: Andres, Jean-Claude

(56) Documents cités:
- EP-A- 0 291 810
- EP-A- 0 381 970
- EP-A- 0 465 393
- CH-A- 654 977

## Description

La présente invention concerne une machine agricole, notamment une andaineuse de végétaux couchés sur le sol, comportant une structure porteuse, au moins un bras télescopique qui est déplaçable d'une position de travail dans une position de transport et inversement, lequel bras est réalisé en au moins deux parties, une première qui est articulée sur la structure porteuse et une seconde qui peut coulisser par rapport à la première et, au moins un organe de travail tel qu'une roue râteleuse qui est articulée sur la partie coulissante du bras télescopique.

Le bras télescopique permet de modifier la position de la roue râteleuse par rapport à la structure porteuse. Ainsi, sur une andaineuse avec deux bras télescopiques portant chacun une roue râteleuse, il est possible de modifier la distance entre ces roues râteleuses. De cette manière, l'utilisateur peut modifier la largeur de travail de l'andaineuse en fonction des végétaux à andainer.

Sur une andaineuse connue de ce genre, la longueur des bras télescopiques est réglable au moyen de vérins hydrauliques. Cet agencement est tributaire du circuit hydraulique du tracteur. Il ne peut être actionné qu'au moyen d'un tracteur qui est équipé en conséquence. De plus, le prix des différents composants hydrauliques qui sont nécessaires sur la machine est relativement élevé.

Un autre inconvénient de l'agencement hydraulique consiste en ce que le raccourcissement des bras télescopiques, pour réduire la hauteur de la machine dans la position de transport, nécessite une commande expresse de la part de l'utilisateur. Cette opération peut cependant être omise. Dans ce cas, la machine est instable et elle peut se renverser, par exemple dans un virage. Les roues râteleuses peuvent aussi rester accrochées lorsque la machine passe sous un porche ou un pont, et subir d'importants dégâts.

La présente invention a pour but de proposer une machine sur laquelle les différentes largeurs de travail peuvent être obtenues facilement et qui revient automatiquement dans la position la plus basse pour le transport.

A cet effet, dans la machine agricole de l'invention chaque bras télescopique comporte un dispositif à ressort qui est situé entre sa première partie et sa partie coulissante, lequel dispositif se comprime sous l'effet du poids de l'organe de travail et de la partie coulissante correspondante lorsqu'ils sont déplacés en position de transport et, pousse ladite partie coulissante et l'organe de travail de manière à les éloigner de la structure porteuse lorsqu'ils sont déplacés en position de travail, ainsi que deux butées dont l'une est prévue sur la première partie et l'autre sur la partie coulissante de chaque bras télescopique, la position de l'une au moins de ces butées étant réglable en vue d'arrêter ladite partie coulissante dans différentes positions de travail.

Ce dispositif à ressort permet au bras télescopique correspondant de se raccourcir automatiquement lorsqu'il est déplacé en position de transport. Par ailleurs, il provoque automatiquement l'allongement dudit bras lorsqu' il est déplacé en position de travail. Différentes largeurs de travail peuvent être obtenues au moyen de la butée réglable.

Les moyens ainsi mis en oeuvre sont extrêmement simples. Ils fonctionnent sans composant hydraulique. Au transport, chaque bras télescopique revient automatiquement dans sa position la plus courte. La hauteur de la machine est ainsi réduite sans intervention expresse de la part de l'utilisateur, ce qui exclut toute omission.

Le dispositif à ressort peut par exemple être constitué par un ressort de compression métallique ou bien un ressort à gaz. La force du ressort utilisé est de préférence comprise entre 50% et 95% du poids de la roue râteleuse et de la partie coulissante du bras porteur.

D'autres caractéristiques et avantages de l'invention ressortiront des revendications et de la description ci-après de quelques exemples de réalisation non limitatifs de l'invention, avec référence aux dessins annexés dans lesquels :
- la figure 1 représente une vue de dessus d'une machine selon l'invention en position de travail,
- la figure 2 représente, à plus grande échelle et avec une coupe partielle, une vue de détail d'un premier exemple de réalisation d'un bras porteur d'un organe de travail, dans la position de travail,
- la figure 3 représente le bras porteur d'un organe de travail selon l'exemple de la figure 2, dans la position de transport,
- la figure 4 représente une vue similaire à celle de la figure 2, d'un second exemple de réalisation du bras porteur d'un organe de travail,
- la figure 5 représente le bras porteur selon l'exemple de la figure 4, dans la position de transport.

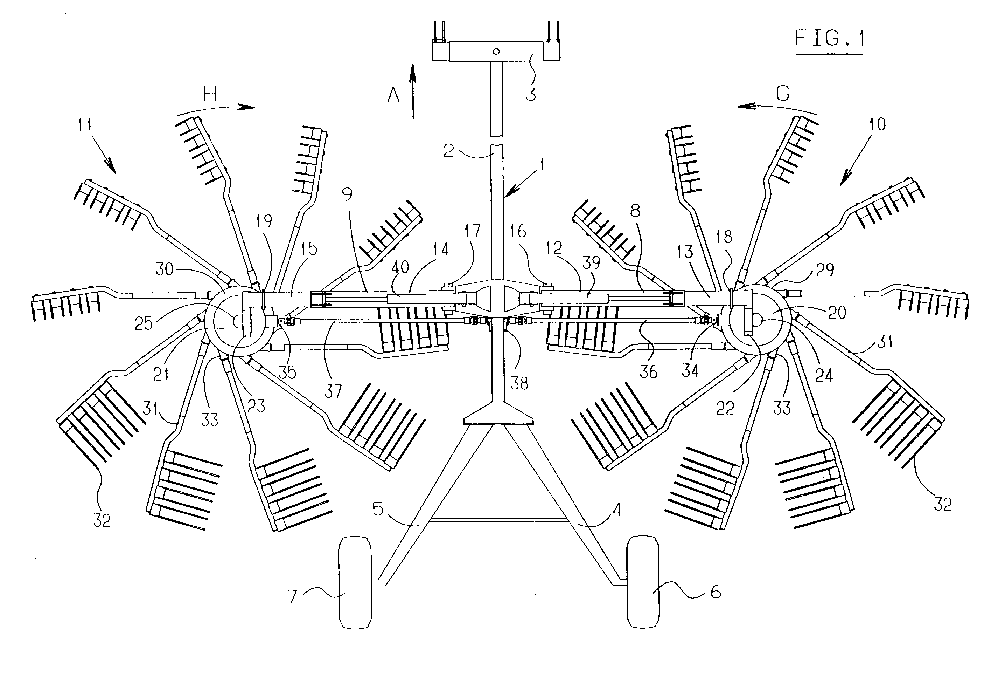

Comme cela ressort notamment de la figure 1, la machine selon l'invention comporte une structure porteuse (1). Celle-ci est notamment constituée par une poutre (2) qui est dirigée dans la direction d'avancement (A). Cette poutre (2) possède à son extrémité avant un dispositif d'accouplement (3) pour l'accrocher à un tracteur d'entraînement qui n'est pas représenté. A son extrémité arrière, elle possède deux supports (4 et 5) divergents, ayant chacun une roue porteuse (6 et 7) qui repose sur le sol. Sur chaque côté de cette poutre (2) est articulé un bras télescopique (8 et 9) portant chacun une roue râteleuse (10 et 11). Chaque bras télescopique (8, 9) pourrait être muni de deux roues râteleuses. Dans ce cas, la machine en comporterait quatre au total et aurait une largeur de travail plus importante. Chacun desdits bras (8 et 9) est réalisé en deux parties (12, 13 et 14, 15) en forme de tubes. Chaque première partie (12, 14) est articulée sur la structure porteuse (1) au moyen d'un axe (16, 17) qui est sensiblement horizontal et dirigé dans la direction d'avancement (A). Chaque deuxième partie (13, 15) peut coulisser dans la première partie (12, 14) en vue de pouvoir allonger ou raccourcir les bras (8 et 9). Ces parties coulissantes (13 et 15) comportent des arrêts (18 et 19) au moyen desquels elles s'appuient contre les premières parties (12 et 14) lorsqu'elles sont totalement rétractées. D'autres modes de réalisation des bras (8, 9) pourraient également être utilisés sans sortir pour autant du cadre de l'invention.

Les deux roues râteleuses (10, 11) sont sensiblement identiques. Chacune comporte un carter (20, 21) qui est articulé à l'extrémité de la partie coulissante (13, 15) de chaque bras télescopique (8, 9) au moyen d'un axe (22, 23) qui est également sensiblement horizontal et dirigé dans la direction d'avancement (A). De part et d'autre de chaque axe (22, 23) sont prévues des butées pour limiter, dans une certaine fourchette, les pivotements des roues râteleuses (10, 11). Dans chacun de ces carters (20, 21) est fixé un axe support (24, 25) qui est sensiblement vertical lorsque la machine est dans la position de travail. Chaque axe support (24, 25) porte à son extrémité la plus éloignée du carter (20, 21) une traverse (26) avec deux roulettes (27 et 28) qui sont dirigées dans la direction d'avancement (A). Entre cette traverse (26) et ledit carter (20, 21) de chaque roue râteleuse (10, 11) est prévu un boîtier (29, 30) avec des bras (31) équipés d'outils de travail (32) tels que des dents. Ce boîtier (29, 30) est monté sur l'axe support (24, 25) de manière à pouvoir tourner autour. Les bras porte-outils (31) sont guidés dans des paliers (33) solidaires du boîtier (29, 30), de sorte qu'ils puissent pivoter autour de leurs axes géométriques longitudinaux respectifs. A l'intérieur de ce boîtier (29, 30) est prévue, d'une manière connue, une came de commande qui est fixée sur l'axe support (24, 25). Chaque bras porte-outils (31) comporte à son extrémité située dans le boîtier (29, 30) un levier avec un galet qui est guidé dans ladite came. Des roues râteleuses avec des outils de travail non commandés pourraient également équiper la machine selon l'invention.

Dans le carter (20, 21) de chaque roue râteleuse (10, 11) sont prévus des moyens mécaniques pour entraîner le boîtier (29, 30) en rotation autour de l'axe support (24, 25). Ces moyens sont constitués par une couronne dentée qui est solidaire de la partie supérieure du boîtier (29, 30) et un pignon d'entraînement qui engrène avec ladite couronne. Ce pignon est lié à un arbre (34, 35) qui s'étend hors du carter (20, 21) en direction de la poutre (2). Sur cet arbre (34, 35) est monté un arbre de transmission (36, 37) avec un joint de cardan près de chacune de ses extrémités. Cet arbre de transmission (36, 37) est relié à un carter de distribution (38) qui est fixé sous la poutre (2) et qui est relié, par d'autres arbres de transmission, à l'arbre de prise de force du tracteur.

Le bras télescopique (8, 9) de chaque roue râteleuse (10, 11) est équipé d'un vérin hydraulique (39, 40) qui permet de le relever dans une position sensiblement verticale pour le transport et de l'abaisser dans une position sensiblement horizontale pour le travail. Chaque vérin (39, 40) est articulé avec une de ses extrémités sur la structure (1) et avec son autre extrémité sur la première partie (12, 14) du bras (8, 9) correspondant.

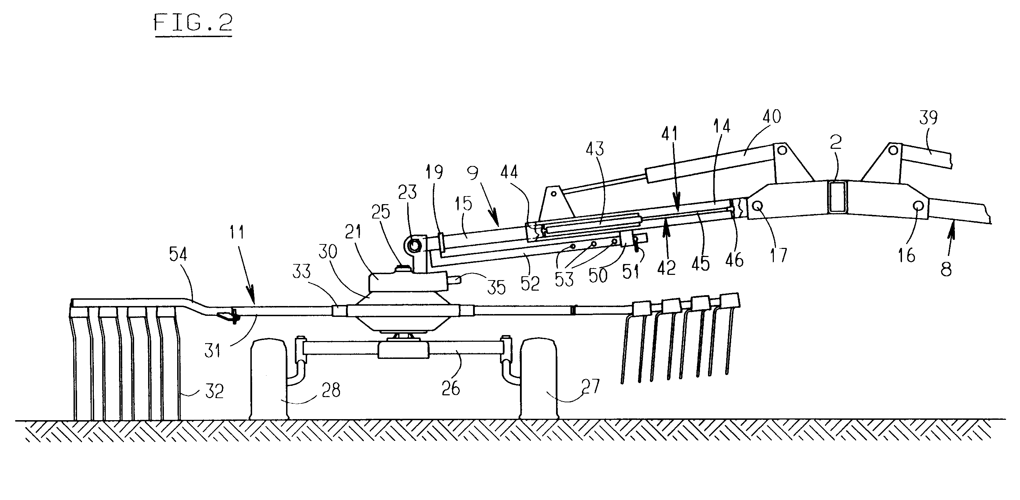

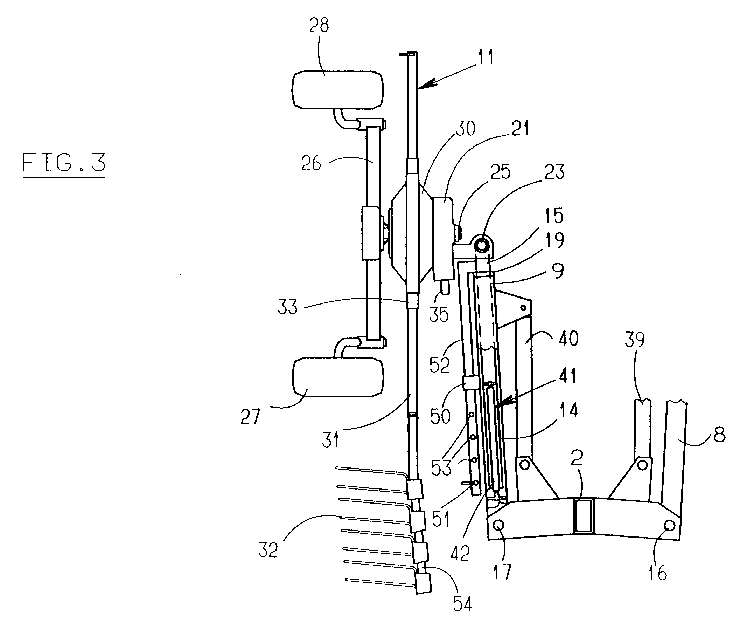

Chaque bras télescopique (8, 9) comporte un dispositif à ressort (41) situé entre sa première partie (12, 14) et sa partie coulissante (13, 15). Ce dispositif à ressort (41) est logé dans le volume intérieur de ces parties (12 à 15). Dans l'exemple de réalisation qui est représenté sur les figures 2 et 3, le dispositif à ressort (41) est constitué par un ressort à gaz (42). Le corps (43) de ce ressort (42) est relié à la partie coulissante (13, 15) du bras télescopique (8, 9) au moyen d'un axe (44). Sa tige (45) est reliée à la première partie (12, 14) dudit bras télescopique, au moyen d'un axe (46).

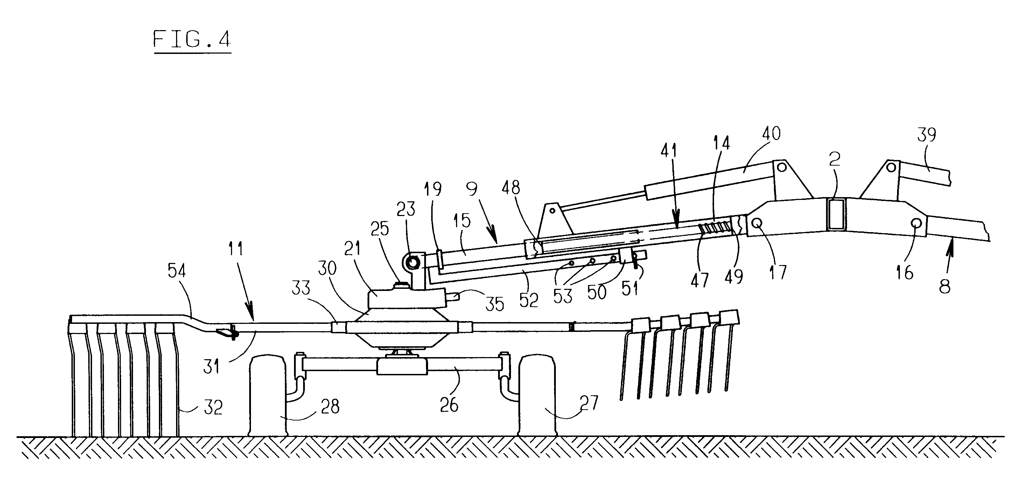

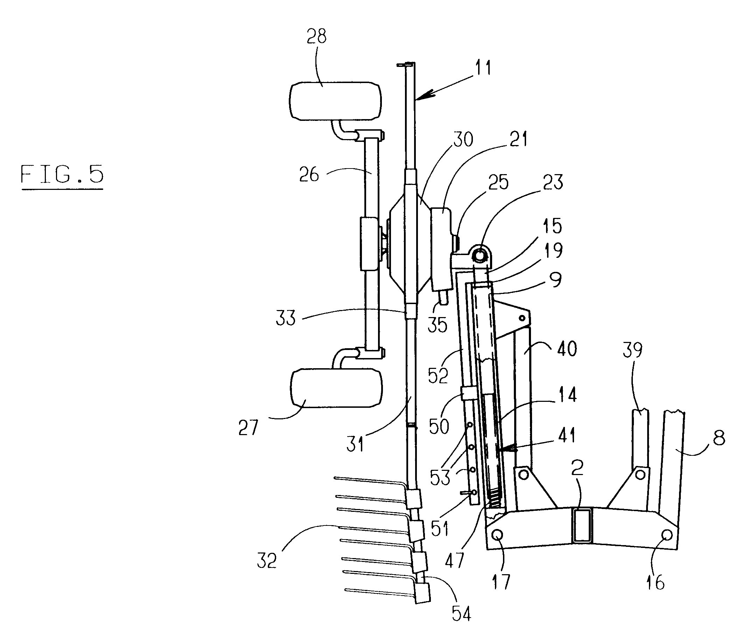

Selon l'exemple de réalisation qui est représenté sur les figures 4 et 5, le dispositif à ressort (41) est constitué par un ressort de pression métallique (47). Ce ressort est partiellement guidé par la partie coulissante (13, 15) du bras télescopique (8, 9). Il s'appuie, d'un côté, contre une plaque (48) qui est solidaire de ladite partie coulissante (13, 15) et, de l'autre côté, contre une plaque (49) solidaire de la première partie (12, 14) du bras télescopique (8, 9).

La partie du ressort (47) qui se situe en-dehors de la partie coulissante (13, 15) peut être guidée par une tige intérieure, fixée sur cette plaque (49).

La force du dispositif à ressort (41), c'est-à-dire aussi bien du ressort à gaz (42) que du ressort de pression (47), est inférieure au poids de la roue râteleuse (10, 11) et de la partie coulissante (13, 15) correspondante du bras télescopique (8, 9). Ladite force est avantageusement comprise entre 50% et 95% dudit poids. Ainsi, le dispositif à ressort (41) se comprime automatiquement sous l'effet du poids de ladite roue râteleuse (10, 11) et de la partie coulissante (13, 15) lorsque celles-ci sont déplacées en position de transport. Inversement, il pousse automatiquement la partie coulissante (13, 15) et la roue râteleuse (10, 11) correspondante, de manière à les éloigner de la structure porteuse (1), lorsqu'elles sont déplacées en position de travail.

Chaque bras télescopique (8, 9) comporte deux butées (50 et 51) dont l'une est prévue sur sa première partie (12, 14) et l'autre sur sa partie coulissante (13, 15). Ces butées (50 et 51) limitent le déplacement vers l'extérieur de la partie coulissante (13, 15). La position de la butée (51) est réglable, ce qui permet d'arrêter ladite partie coulissante dans différentes positions de travail.

La butée (50) est constituée par un oeillet qui est solidaire de la première partie (12, 14) du bras télescopique (8, 9). L'autre butée (51) est constituée par une broche qui est associée à la partie coulissante (13, 15). Cette dernière comporte une tige (52) qui est parallèle à son axe géométrique longitudinal. Cette tige coulisse dans l'oeillet qui constitue la butée (50) et comporte plusieurs orifices (53) pour la broche constituant la butée (51). Ces orifices (53) sont prévus à des intervalles réguliers, sur la partie de la tige (52) qui est dirigée vers la poutre (2).

Durant le travail, la machine selon l'invention est attelée à un tracteur qui la déplace dans le sens de la flèche (A) (voir figure 1). Les deux bras télescopiques (8 et 9) sont alors abaissés, de sorte que les roulettes (27 et 28) des deux roues râteleuses (10 et 11) reposent sur le sol. Les boîtiers (29 et 30) de ces roues râteleuses sont entraînés en rotation dans le sens des flèches (G et H) à partir du tracteur. Durant cette rotation, les bras porte-outils (31) de chaque roue râteleuse (10, 11) sont commandés par la came qui est logée dans le boîtier (29, 30), de telle sorte que leurs outils (32) râtellent les végétaux sur la partie avant de leur trajectoire et les déposent sous la forme d'un andain sur la bande de terrain qui est située entre les deux roues râteleuses (10 et 11).

La largeur de travail de cette machine peut être augmentée ou diminuée en modifiant la longueur des bras télescopiques (8 et 9) et par conséquent la distance entre les roues râteleuses (10 et 11). Ceci permet d'augmenter la largeur, par exemple, lorsque les végétaux ne sont pas denses. Par contre, lorsqu'ils sont très denses, la largeur de travail peut être réduite afin d'éviter que le volume de l'andain ne soit trop important.

Sur cette machine, l'utilisateur détermine la longueur des bras télescopiques (8 et 9) au moyen des butées (50 et 51). Pour cela, il lui suffit de déplacer les butées (51) d'un orifice (53) à l'autre. Sur chaque bras télescopique (8 ou 9), l'orifice (53) qui est le plus proche de la poutre (2) permet d'obtenir la plus importante longueur. Inversement, l'orifice (53) le plus éloigné de ladite poutre (2) permet d'obtenir la plus faible longueur du bras télescopique (8, 9). Les orifices (53) situés entre les deux orifices extrêmes permettent d'obtenir des largeurs intermédiaires. Le positionnement des butées réglables (51) s'effectue lorsque les bras télescopiques (8 et 9) sont relevés (figures 3 et 5). Ensuite, il suffit d'abaisser les bras télescopiques (8 et 9) dans la position de travail. Dès qu'ils approchent de la position horizontale, les dispositifs à ressort (41) poussent les parties coulissantes (13 et 15) avec les roues râteleuses (10 et 11) vers l'extérieur jusqu'à ce que les butées réglables (51) rencontrent les butées fixes (50). La machine est alors dans la position de travail souhaitée (figures 2 et 4).

Par ailleurs, lorsque les bras télescopiques (8 et 9) sont relevés en position de transport au moyen des vérins hydrauliques (39 et 40), leurs roues râteleuses (10 et 11) compriment les dispositifs à ressort (41). Lesdites roues râteleuses reviennent alors automatiquement, avec les parties coulissantes (13 et 15), dans la position la plus basse possible. Dans cette position, les bras télescopiques (8 et 9) sont entièrement rétractés (figures 3 et 5). La hauteur de la machine est ainsi automatiquement réduite.

Dans cette position de transport, les bras télescopiques (8 et 9) peuvent être bloqués au moyen d'un dispositif de verrouillage évitant tout retour accidentel en position de travail. Les bras porte-outils (31) peuvent avoir des parties extérieures (54) démontables. L'utilisateur a ainsi la possibilité de démonter celles qui sont dirigées vers le haut, afin d'obtenir une réduction supplémentaire de la hauteur de la machine.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine agricole, notamment une andaineuse de végétaux couchés sur le sol, comportant une structure porteuse, au moins un bras télescopique qui est déplaçable d'une position de travail dans une position de transport et inversement, lequel bras est réalisé en au moins deux parties, une première qui est articulée sur la structure porteuse et une seconde qui peut coulisser par rapport à la première et, au moins un organe de travail tel qu'une roue râteleuse, qui est articulé sur la partie coulissante du bras télescopique, caractérisée par le fait que chaque bras télescopique (8, 9) comporte un dispositif à ressort (41) situé entre sa première partie (12, 14) et sa partie coulissante (13, 15), lequel dispositif (41) se comprime sous l'effet du poids de l'organe de travail (10, 11) et de la partie coulissante (13, 15) correspondante, lorsque ceux-ci sont déplacés en position de transport et, pousse ladite partie coulissante (13, 15) et l'organe de travail (10, 11) de manière à les éloigner de la structure porteuse (1) lorsqu'ils sont déplacés en position de travail, ainsi que deux butées (50 et 51) dont l'une est prévue sur la première partie (12, 14) et l'autre sur la partie coulissante (13, 15) de chaque bras télescopique (8, 9), la position de l'une au moins de ces butées étant réglable en vue d'arrêter ladite partie coulissante (13, 15) dans différentes positions de travail.

2. Machine selon la revendication 1, caractérisée par le fait que le dispositif à ressort (41) est constitué par un ressort de compression métallique (47) placé entre la première partie (12, 14) et la partie coulissante (13, 15) de chaque bras télescopique (8, 9).

3. Machine selon la revendication 1, caractérisée par le fait que le dispositif à ressort (41) est constitué par un ressort à gaz (42) placé entre la première partie (12, 14) et la partie coulissante (13, 15) de chaque bras télescopique (8, 9).

4. Machine selon la revendication 1,2 ou 3, caractérisée par le fait que la force de chaque dispositif à ressort (41) est inférieure au poids de la roue râteleuse (10, 11) correspondante et de la partie coulissante (13, 15) des bras télescopiques (8, 9).

5. Machine selon la revendication 1, caractérisée par le fait qu'une des butées (50) est constituée par un oeillet qui est solidaire de la première partie (12, 14) du bras télescopique (8, 9).

6. Machine selon la revendication 5, caractérisée par le fait que la partie coulissante (13, 15) du bras télescopique (8, 9) comporte une tige (52) qui est parallèle à son axe longitudinal, laquelle tige (52) coulisse dans l'oeillet constituant l'une des butées (50) et comporte plusieurs trous de positionnement (53) pour une broche constituant l'autre butée (51).

## Claims

1. Agricultural machine, especially a windrower for plants lying on the ground, comprising a carrying structure, at least one telescopic arm which is displaceable from a work position in a transport position and vice versa, the said arm being achieved in at least two parts, a first one which is articulated on the carrying structure and a second one which can slide with regard to the first part and, at least one working tool like a raking wheel, which is articulated on the sliding part of the telescopic arm, characterised in that each telescopic arm (8, 9) comprises a device with a spring (51) located between its first part (12, 14) and its sliding part (13, 15), which device (41) is compressed under the action of the weight of the working tool (10, 11) and of the corresponding sliding part (13, 15), when these are displaced in the transport position and, push the said sliding part (13, 15) and the working tool (10, 11) so as to move them away from the carrying structure (1) when they are displaced in the work position, as well as two stops (50 and 51) one of which is foreseen on the first part (12, 14) and the other on the sliding part (13, 15) of each telescopic arm (8, 9), the position of one at least of these stops being adjustable in order to stop the said sliding part (13, 15) in different work positions.

2. Machine according to claim 1, characterised in that the device with a spring (41) is made up of a metal compression-spring (47) located between the first part (12, 14) and the sliding part (13, 15) of each telescopic arm (8, 9).

3. Machine according to claim 1, characterised in that the device with a spring (41) is made up of a gas spring (42) located between the first part (12, 14) and the sliding part (13, 15) of each telescopic arm (8, 9).

4. Machine according to claim 1, 2 or 3, characterised in that the strength of each device with a spring (41) is smaller than the weight of the corresponding raking wheel (10, 11) and of the sliding part (13, 15) of the telescopic arms (8, 9).

5. Machine according to claim 1, characterised in that one of the stops (50) is made up of an eyelet which is integral with the first part (12, 14) of the telescopic arm (8, 9).

6. Machine according to claim 5, characterised in that the sliding part (13, 15) of the telescopic arm (8, 9) comprises a rod (52) which is parallel to its longitudinal axis, which rod (42) slides in the eyelet constituting one of the stops (50) and comprises several positioning holes (53) for a spindle constituting the other stop (51).

## Patentansprüche

1. Landwirtschaftliche Maschine, insbesondere ein Schwader für auf dem Boden befindliches Pflanzengut, der ein Traggestell, mindestens einen Teleskoparm, der aus einer Arbeitsstellung in eine Transportstellung und umgekehrt verstellbar ist, welcher Arm mindestens aus zwei Teilen besteht, einem ersten, der am Traggestell angelenkt ist und einem zweiten, der in bezug auf den ersten verschiebbar ist, und mindestens ein Arbeitsorgan, wie ein Rechrad, das an dem verschiebbaren Teil des Teleskoparmes angelenkt ist, aufweist, dadurch gekennzeichnet, dass jeder Teleskoparm (8, 9) eine Federvorrichtung (41) aufweist, die sich zwischen seinem ersten Teil (12, 14) und seinem verschiebbaren Teil (13, 15) befindet, welche Vorrichtung (41) sich unter der Wirkung des Gewichtes des Arbeitsorgans (10, 11) und des entsprechenden verschiebbaren Teiles (13, 15) komprimiert, wenn diese in die Transportstellung verstellt werden und diesen verschiebbaren Teil (13, 15) und das Arbeitsorgan (10, 11) schiebt, so dass sie diese von dem Traggestell (1) entfernt, wenn diese in die Arbeitsstellung verstellt werden, sowie zwei Anschläge (50 und 51), von denen einer auf dem ersten Teil (12, 14) und der andere auf dem verschiebbaren Teil (13, 15) jedes Teleskoparms (8, 9) vorgesehen ist, wobei die Stellung mindestens eines dieser Anschläge verstellbar ist um den verschiebbaren Teil (13, 15) in verschiedenen Stellungen anzuhalten.

2. Maschine nach Anspruch 1, dadurch gekennzeichnet, dass die Federvorrichtung (41) aus einer Druckfeder aus Draht (47) besteht, die sich zwischen dem ersten Teil (12, 14) und dem verschiebbaren Teil (13, 15) jedes Teleskoparms (8, 9) befindet.

3. Maschine nach Anspruch 1, dadurch gekennzeichnet, dass die Federvorrichtung (41) aus einer Gasfeder (42) besteht, die sich zwischen dem ersten Teil (12, 14) und dem verschiebbaren Teil (13, 15) jedes Teleskoparms (8, 9) befindet.

4. Maschine nach Anspruch 1, 2 oder 3, dadurch gekennzeichnet, dass die Kraft jeder Federvorrichtung (41) geringer ist als das Gewicht des entsprechenden Rechrades (10, 11) und des verschiebbaren Teils (13, 15) der Teleskoparme (8, 9).

5. Maschine nach Anspruch 1, dadurch gekennzeichnet, dass einer der Anschläge (50) aus einer Öse besteht, die mit dem ersten Teil (12, 14) des Teleskoparms (8, 9) fest verbunden ist.

6. Maschine nach Anspruch 5, dadurch gekennzeichnet, dass der verschiebbare Teil (13, 15) des Teleskoparms (8, 9) eine zu seiner Längsachse (52) parallele Stange aufweist, welche Stange (52) in der Öse, die einen der Anschläge (50) bildet, gleitet und mehrere Einstellungslöcher (53) aufweist für einen den anderen Anschlag (51) bildenden Stift.
